# EUROPÄISCHE PATENTSCHRIFT

(11) **EP 3 662 174 B1**
(45) Veröffentlichungstag und Bekanntmachung des Hinweises auf die Patenterteilung: **12.05.2021**
(21) Anmeldenummer: 18759044.3
(22) Anmeldetag: 02.08.2018
(51) Int. Cl.: F16D 65/12

(54) **BREMSSCHEIBE UND VERFAHREN ZUR HERSTELLUNG EINER BREMSSCHEIBE**
BRAKE DISC AND METHOD FOR PRODUCING A BRAKE DISC
DISQUE DE FREIN ET PROCÉDÉ DE FABRICATION D'UN DISQUE DE FREIN

(30) Priorität: 02.08.2017 DE 102017213370; 01.08.2018 DE 102018212864
(43) Veröffentlichungstag der Anmeldung: 10.06.2020
(73) Patentinhaber: Robert Bosch GmbH, 70442 Stuttgart (DE)
(72) Erfinder: BOZOVIC, Ilija, Sopot Djurinci 11450 (RS); RAAB, Roland, 69168 Wiesloch (DE); LE BARZIC, Laurent, 67000 Strasbourg (FR)
(86) Internationale Anmeldenummer: PCT/EP2018/070976
(87) Internationale Veröffentlichungsnummer: WO 2019/025532

(56) Entgegenhaltungen:
- EP-A1- 0 564 942
- DE-A1- 10 032 972
- DE-A1-102015 226 450

## Beschreibung

Die vorliegende Erfindung betrifft eine Bremsscheibe bzw. ein Verfahren zur Herstellung einer Bremsscheibe mit den Merkmalen der unabhängig formulierten Ansprüche.

Bremsscheiben haben die Aufgabe, das Bremsmoment bei einer Verzögerung des Fahrzeugs auf die Achse zu übertragen sowie die bei der Bremsung auftretende kinetische Energie kurzzeitig in Form von Wärme zwischenzuspeichern und nachfolgend über Leitung, Strahlung und Konvektion wieder abzugeben.

Bremsscheiben werden im Stand der Technik üblicherweise einteilig aus Gusseisen mit Lamellengraphit erzeugt.

Im Rahmen des Leichtbau werden Bremsscheiben, insbesondere im Bereich des Bremstopfes, durch andere, in der Regel leichtere Materialien als Grauguss ersetzt. Beispielhaft ist hier ein Blechtopf zu nennen. Ebenfalls kann der Bremstopf durch einen Aluminiumtopf ersetzt werden. Beispielhaft ist hierzu die DE 100 32 972 B4 zu nennen. Hier ist eine Verbund-Bremsscheibe für eine Fahrzeug beschrieben, die einen aus Gusswerkstoff ausgeführten Reibring aufweist, der an einem aus einem anderen Werkstoff bestehenden Bremsscheibentopf befestigt ist. Der Reibring wird nun mit dem Bremstopf mittels einer Fügestelle zwischen Reibring und Bremsscheibentopf durch Verbindungselemente verbunden.

Die EP564942A1 zeigt die Verbindung zwischen einem Bremstopf und einer Bremsscheibe durch axial angebrachte Verbindungsmittel mit einem Zwischenstück.

### Offenbarung der Erfindung

Die Erfindung geht aus von einer Bremsscheibe mit neue Beschreibungsseite 2
einem wenigstens zum Teil aus einem ersten Material bestehenden Reibring, und
einem wenigstens zum Teil aus einem vom ersten Material unterschiedlichen zweiten Material bestehenden Bremstopf, wobei
der Reibring einen in axial Richtung ausgebildeten Bund aufweist, und
der Bund mit einem axial zum Reibring (101a, 101b) hin gerichteten Rand des Bremstopfs mittels wenigstens eines Verbindungselements verbunden ist.

Der Kern der Erfindung besteht darin, dass zwischen dem über den Rund dem Rand vorgesehenes Loch durchgeführtes Verbindungselement anliegenden gekrümmten Oberfläche des Bremstopfs und dem Verbindungselement ein plastisch verformbares Zwischenstück vorgesehen ist.

Um eine stabile mechanische Verbindung zwischen dem Bund des Reibrings und dem Bremstopfs zu realisieren, ist eine gute mechanische Verbindung zwischen dem Verbindungselement und dem Bremstopf und/oder Bund notwendig. Da die Oberfläche des Bunds in der Regel gekrümmt ausgestaltet ist, würde zwischen der in der Regel eben ausgestalteten und zum Bremstopf hin gerichteten Oberfläche des Verbindungselements und dem Bremstopf eine Lücke entstehen. Diese Lücke könnte beispielsweise durch Ausnehmungen im Bremstopf im Bereich des Verbindungselements erreicht werden. Das Material eines Bremstopfs in Leichtbauweise hat aber in der Regel nur eine Dicke von ca. 2,5 mm bis 2,8 mm. Aus diesem Grund würde eine Ausnehmung im Bereich eines Verbindungselements zu einer weiteren Reduktion des ohnehin bereits sehr dünnen Materials führen. Die Erfindung löst dieses Problem, indem zwischen der an dem Verbindungselement anliegenden Oberfläche des Bremstopfs und dem Verbindungselement ein Zwischenstück vorgesehen ist. Hierbei ist es erfindungsgemäß vorgesehen, dass das Zwischenstück nicht eine elastisch verformbare Unterlegscheibe oder Hülse ist sondern sich unter dem Druck des Verbindungselements plastisch verformt. Damit kommt es, im Unterschied zu einer elastischen Verformung durch Flächenpressung, zu einer sehr stabilen mechanischen Verbindung neue Beschreibungsseite 3
zwischen dem Bund des Reibrings und dem Bremstopf. Die beschriebene Lücke kann somit sehr wirksam geschlossen werden.

In einer vorteilhaften Ausgestaltung der Erfindung ist vorgesehen, dass das Verbindungselement als Niet ausgebildet ist und das Zwischenstück zwischen dem Nietkopf und der am Nietkopf anliegenden Oberfläche des Bremstopf vorgesehen ist. Insbesondere ist hier das zwischen dem Nietkopf und dem Bremstopf eingefügte Zwischenstück aus einem solchen Material, dass es sich durch das Setzen des Niets verformt. Durch diese Verformung kommt es zu einer sehr stabilen mechanische Verbindung zwischen dem Bund des Reibrings und dem Bremstopf.

Besonders vorteilhaft ist es, dass der Bremstopf wenigstens zum Teil aus Leichtmetall, insbesondere Aluminium, besteht. Ebenso kann der Bremstopf wenigstens zum Teil aus Metall, insbesondere Blech, besteht.

Der Reibring kann aus Grauguss bestehen.

In einer vorteilhaften Ausgestaltung der Erfindung ist vorgesehen, dass der Bund an dem Reibring angeformt ausgebildet ist.

Die Erfindung betrifft insbesondere auch ein Verfahren zur Herstellung der erfindungsgemäßen Bremsscheibe. Dabei geht auch das erfindungsgemäße Verfahren aus von:
einem wenigstens zum Teil aus einem ersten Material bestehenden Reibring, der einen in axial Richtung ausgebildeten Bund aufweist, und
einem wenigstens zum Teil aus einem vom ersten Material unterschiedlichen zweiten Material bestehenden Bremstopf, der einen axial zum Reibring hin gerichteten Rand aufweist.

Erfindungsgemäß sind folgende Schritten vorgesehen:
Bereitstellen des wenigstens einen Reibrings,
Bereitstellen des Bremstopfs,
neue Beschreibungsseite 4
• Verbinden des Bundes mit dem Bremstopf mittels eines Verbindungselements, wobei vor dem Verbinden zwischen dem Verbindungselement, das über den im Bund und im Rand vorgesehenes Loch durchgeführt wird, und der zu dem Verbindungselement angrenzenden gekrümmten Oberfläche des Bundes ein Zwischenstück angebracht wird.

Weitere vorteilhafte Ausgestaltungen der Erfindung sind den Unteransprüchen und dem Ausführungsbeispiel zu entnehmen.

### Zeichnungen

Nachfolgend werden Ausführungsbeispiele der Erfindung anhand von Zeichnungen erläutert.
Die Figur 1 zeigt eine fertig montierte Bremsscheibe in Leichtbauweise gemäß der Erfindung.
Die Figur 2 zeigt eine Bremsscheibe in Leichtbauweise vor der Montage gemäß der Erfindung.
Die Figur 3 zeigt eine fertig montierte Bremsscheibe in Leichtbauweise gemäß der Erfindung als Schnittbild.
Die Figur 4 zeigt das erfindungsgemäße Herstellungsverfahren.

### Beschreibung von Ausführungsbeispielen

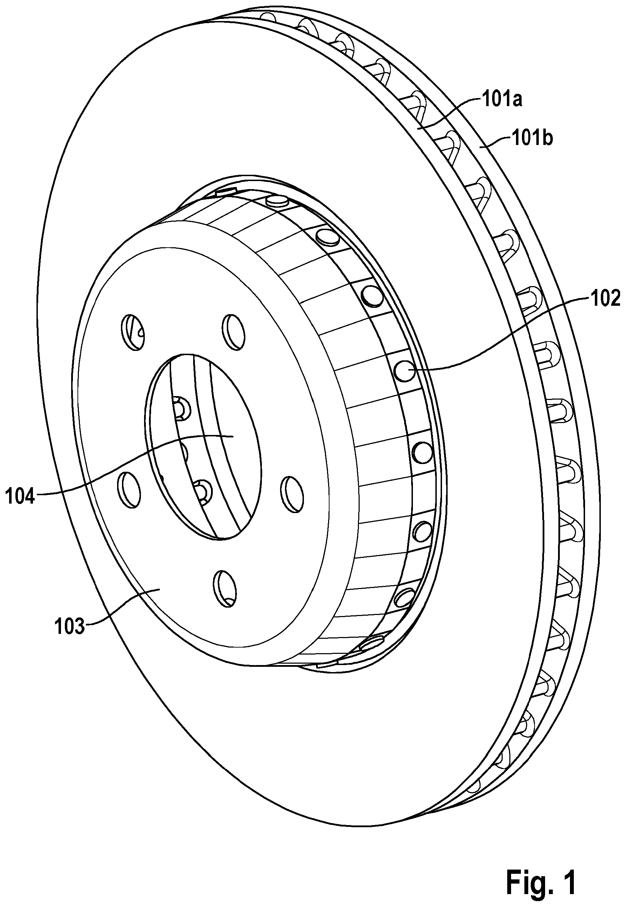

Die in Figur 1 dargestellte Bremsscheibe weist zwei kreisringscheibenförmigen Bremsringe 101a und 101b auf, die mit Distanzelementen verbunden sind. Die dargestellte Bremsscheibe ist innenbelüftet, ihr Bremsring ist doppelwandig. Äußere Stirnflächen des Bremsrings bilden kreisringscheibenförmige Reibflächen 101a und 101b der Bremsscheibe. Die Reibflächen sind die Oberflächen der Bremsscheibe, gegen die beim Bremsen nicht dargestellte Reibbremsbeläge gedrückt werden, um die Bremsscheibe durch Reibung zu bremsen. Die Bremsscheibe besteht in diesem Ausführungsbeispiel aus Grauguss oder einer Stahllegierung. Die Bremsscheibe weist mittig eine Ausnehmung 104 auf.

Mit dem Bezugszeichen 103 ist der Bremstopf gekennzeichnet, der mittels der Verbindungselemente 102 mit der Bremsscheibe verbunden ist.

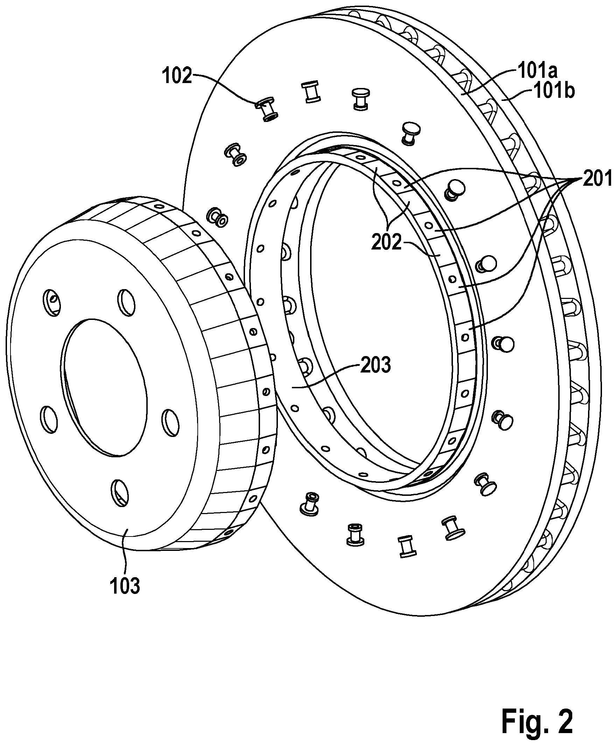

Die Figur 2 zeigt die in der Figur 1 dargestellte Bremsscheibe vor der Verbindung des Bremstopfs 103 mit der Bremsscheibe 101a/b.

Axialsymmetrisch an der Bremsscheibe 101a/b angebracht ist ein Bund 203 mit den Außenflächen 201 und 202. Die Verbindungselemente 102 sind über ihren zugehörigen Löchern in dem Bund 201 und 202 dargestellt. Zur Verbindung zwischen Bremstopf 103 und Bremsscheibe 101a/b werden im äußeren Rand des Bremstopfs 103 vorgesehen Löcher mit den erwähnten Löcher im Bund in Überdeckung gebracht. Danach können die hier als Nieten 201 vorgesehenen Verbindungsmittel angebracht werden.

Sowohl der Bund mit den Oberflächen 201 und 202 als auch der äußere Rand des Bremstopfs 103 weisen gebogene, gekrümmte und/oder kreisbogenförmige Flächen 201 und 202 auf. Diese gebogenen, gekrümmten und/oder kreisbogenförmigen Flächen 201 und 202 folgen im Wesentlichen der durch die runde Ausnehmung 104 vorgegebenen Form.

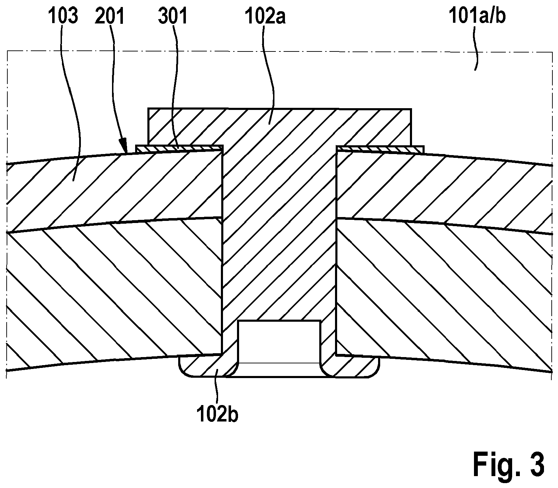

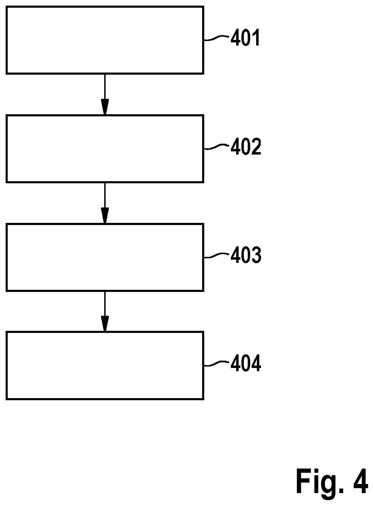

Die Figur 3 zeigt eine fertig montierte Bremsscheibe in Leichtbauweise gemäß der Erfindung als Schnitt (Draufsicht auf die Reibfläche des Reibrings). Man erkennt, dass zwischen dem Niet 102 und zum Nietkopf hin gerichteten Oberfläche des Randes 201 des Bremstopfs 103 ein Zwischenstück 301 angeordnet ist. Um eine stabile mechanische Verbindung zwischen dem Bund des Reibrings und dem Bremstopfs zu realisieren, ist eine gute mechanische Verbindung zwischen dem Verbindungselement und dem Bremstopf und/oder Bund notwendig. Da die Oberfläche des Bunds und des Rands 201 des Bremstopfs 103 in der Regel gekrümmt ausgestaltet ist, würde zwischen der in der Regel eben ausgestalteten und zum Bremstopf hin gerichteten Oberfläche des Niets 102 und dem Rand 201 des Bremstopf eine in den äußeren Bereichen des Nietkopfs 102 größer werdende Lücke enstehen. Diese Lücke könnte beispielsweise durch Ausnehmungen im Bremstopf im Bereich des Niets 102 erreicht werden. Das Material eines Bremstopfs in Leichtbauweise hat aber in der Regel nur eine Dicke von ca. 2,5 mm bis 2,8 mm. Aus diesem Grund würde eine Ausnehmung im Bereich eines Verbindungselements zu einer weiteren Reduktion des ohnehin bereits sehr dünnen Materials führen. Wie in der Figur 3 gezeigt löst die Erfindung dieses Problem, indem zwischen der an dem Niet 102 anliegenden Oberfläche des Bremstopfs und dem Niet 102 ein Zwischenstück 301 vorgesehen ist. Hierbei ist es erfindungsgemäß vorgesehen, dass das Zwischenstück 301 nicht eine elastisch verformbare Unterlegscheibe oder Hülse ist, sondern sich unter dem Druck des Verbindungselements plastisch verformt. Damit kommt es, im Unterschied zu einer elastischen Verformung durch Flächenpressung, zu einer sehr stabilen mechanischen Verbindung zwischen dem Bund des Reibrings und dem Bremstopf. Die beschriebene Lücke kann somit sehr wirksam geschlossen werden.Anhand der Figur 4 soll nun das Verfahren zur Herstellung der erfindungsgemäßen Bremsscheibe erläutert werden.

Im Schritt 401 wird der Reibring 101a/b und im Schritt 402 der Bremstopf bereitgestellt.

Im Schritt 403 wird dann zwischen dem Verbindungselement 102 und dem zu dem Verbindungselement 102 angrenzenden Oberfläche des Bundes 201, 202 ein Zwischenstück 301 angebracht wird. Genauer gesagt wird im Schritt 403 das Zwischenstück 301 zwischen dem Nietkopf und der am Nietkopf anliegenden Oberfläche 201 des Bremstopf 103 angebracht.

Im Schritt 404 wird der Bund 201, 202 mit dem Bremstopf 103 mittels des Verbindungselements 102 verbunden.

## Patentansprüche

1. Bremsscheibe mit
einem wenigstens zum Teil aus einem ersten Material bestehenden Reibring (101a, 101b), und
einem wenigstens zum Teil aus einem vom ersten Material unterschiedlichen zweiten Material bestehenden Bremstopf (103), wobei
der Reibring (101a, 101b) einen in axiale Richtung ausgebildeten Bund (201, 202) aufweist, und
der Bund (201, 202) mit einem axial zum Reibring (101a, 101b) hin gerichteten Rand des Bremstopfs (103) mittels wenigstens eines Verbindungselements (102) verbunden ist,
**dadurch gekennzeichnet, dass**
zwischen dem über den Bund (201, 202) und dem Rand vorgesehenes Loch durchgeführtes Verbindungselement (102) anliegenden gekrümmten Oberfläche (201) des Bremstopfs (103) und dem Verbindungselement (102) ein plastisch verformbares Zwischenstück (301) vorgesehen ist.

2. Bremsscheibe nach Anspruch 1, **dadurch gekennzeichnet, dass** das Verbindungselement als Niet (102) ausgebildet ist und das Zwischenstück (301) zwischen dem Nietkopf und der am Nietkopf anliegenden Oberfläche (201) des Bremstopfs (103) vorgesehen ist.

3. Bremsscheibe nach Anspruch 1, **dadurch gekennzeichnet, dass** der Bremstopf (103) wenigstens zum Teil aus Leichtmetall, insbesondere Aluminium, besteht.

4. Bremsscheibe nach Anspruch 1, **dadurch gekennzeichnet, dass** der Bremstopf (103) wenigstens zum Teil aus Metall, insbesondere Blech, besteht.

5. Bremsscheibe nach Anspruch 1, **dadurch gekennzeichnet, dass** der Reibring (101a, 101b) aus Grauguss besteht.

6. Bremsscheibe nach Anspruch 1, **dadurch gekennzeichnet, dass** der Bund (201, 202) an dem Reibring (101a, 101b) angeformt ausgebildet ist.

7. Verfahren zur Herstellung einer Bremsscheibe mit
einem wenigstens zum Teil aus einem ersten Material bestehenden Reibring (101a, 101b), der einen in axial Richtung ausgebildeten Bund (201, 202) aufweist, und
einem wenigstens zum Teil aus einem vom ersten Material unterschiedlichen zweiten Material bestehenden Bremstopf (103), der einen axial zum Reibring (101a, 101b) hin gerichteten Rand aufweist,
mit folgenden Schritten:
Bereitstellen (401) des wenigstens einen Reibrings (101a, 101b),
Bereitstellen (402) des Bremstopfs (103),
Verbinden (404) des Bundes (201, 202) mit dem Bremstopf (103) mittels eines Verbindungselements (102), das über den im Bund (201, 202) und im Rand vorgesehenes Loch durchgeführt wird, **dadurch gekennzeichnet, dass**
das vor dem Verbinden (404) zwischen dem Verbindungselement (102) und dem zu dem Verbindungselement (102) angrenzenden gekrümmten Oberfläche des Bundes (201, 202) ein plastisch verformbares Zwischenstück (301) angebracht wird.

8. Verfahren nach Anspruch 7, **dadurch gekennzeichnet, dass** das Verbindungselement als Niet (102) ausgebildet ist und das Zwischenstück (301) zwischen dem Nietkopf und der am Nietkopf anliegenden Oberfläche (201) des Bremstopf (103) vorgesehen ist.

9. Verfahren nach Anspruch 7, **dadurch gekennzeichnet, dass** der Bremstopf (103) wenigstens zum Teil aus Leichtmetall, insbesondere Aluminium, besteht.

10. Verfahren nach Anspruch 7, **dadurch gekennzeichnet, dass** der Bremstopf (103) wenigstens zum Teil aus Metall, insbesondere Blech, besteht.

11. Verfahren nach Anspruch 7, **dadurch gekennzeichnet, dass** der Reibring (101a, 101b) aus Grauguss besteht.

## Claims

1. Brake disc with
a friction ring (101a, 101b) which consists at least in part of a first material, and
a brake pot (103) which consists at least in part of a second material which is different from the first material,
the friction ring (101a, 101b) having an collar (201, 202) which is configured in the axial direction, and the collar (201, 202) being connected by means of at least one connecting element (102) to an edge of the brake pot (103), which edge is directed axially towards the friction ring (101a, 101b),
**characterized in that**
a plastically deformable intermediate piece (301) is provided between the connecting element (102) and the curved surface (201) of the brake pot (103), which surface (201) bears against the connecting element (102) which is guided through via a hole which is provided in the collar (201, 202) and the edge.

2. Brake disc according to Claim 1, **characterized in that** the connecting element is configured as a rivet (102), and the intermediate piece (301) is provided between the rivet head and that surface (201) of the brake pot (103) which bears against the rivet head.

3. Brake disc according to Claim 1, **characterized in that** the brake pot (103) consists at least in part of light metal, in particular aluminium.

4. Brake disc according to Claim 1, **characterized in that** the brake pot (103) consists at least in part of metal, in particular sheet metal.

5. Brake disc according to Claim 1, **characterized in that** the friction ring (101a, 101b) consists of grey cast iron.

6. Brake disc according to Claim 1, **characterized in that** the collar (201, 202) is configured such that it is integrally formed on the friction ring (101a, 101b).

7. Method for producing a brake disc with
a friction ring (101a, 101b) which consists at least in part of a first material and has a collar (201, 202) which is configured in the axial direction, and
a brake pot (103) which consists at least in part of a second material which is different from the first material, and has an edge which is directed axially towards the friction ring (101a, 101b),
with the following steps:
providing (401) the at least one friction ring (101a, 101b),
providing (402) the brake pot (103),
connecting (404) the collar (201, 202) to the brake pot (103) by means of a connecting element (102) which is guided through the hole which is provided in the collar (201, 202) and in the edge, **characterized in that**
a plastically deformable intermediate piece (301) is attached before the connecting (404) between the connecting element (102) and that curved surface of the collar (201, 202) which adjoins the connecting element (102) .

8. Method according to Claim 7, **characterized in that** the connecting element is configured as a rivet (102), and the intermediate piece (301) is provided between the rivet head and that surface (201) of the brake pot (103) which bears against the rivet head.

9. Method according to Claim 7, **characterized in that** the brake pot (103) consists at least in part of light metal, in particular aluminium.

10. Method according to Claim 7, **characterized in that** the brake pot (103) consists at least in part of metal, in particular sheet metal.

11. Method according to Claim 7, **characterized in that** the friction ring (101a, 101b) consists of grey cast iron.

## Revendications

1. Disque de frein comprenant
une bague de friction (101a, 101b) au moins partiellement en une première matière, et
un pot de frein (103) qui est au moins partiellement en une deuxième matière différente de la premier matière, la bague de friction (101a, 101b) comportant un collet (201, 202) formé dans la direction axiale, et
le collet (201, 202) étant relié à un bord du pot de frein (103), qui est dirigé axialement vers la bague de friction (101a, 101b), au moyen d'au moins un élément de liaison (102),
**caractérisé en ce que**
une pièce intermédiaire (301) déformable plastiquement est prévue entre l'élément de liaison (102) et la surface incurvée (201) du pot de frein (103) qui est appui sur l'élément de liaison (102) traversé par un trou ménagé dans le collet (201, 202) et le bord.

2. Disque de frein selon la revendication 1, **caractérisé en ce que** l'élément de liaison est réalisé sous la forme d'un rivet (102) et la pièce intermédiaire (301) est prévue entre la tête de rivet et la surface (201) du pot de frein (103) en appui sur la tête de rivet.

3. Disque de frein selon la revendication 1, **caractérisé en ce que** le pot de frein (103) est au moins en partie en métal léger, notamment en aluminium.

4. Disque de frein selon la revendication 1, **caractérisé en ce que** le pot de frein (103) est au moins en partie en métal, notamment en tôle.

5. Disque de frein selon la revendication 1, **caractérisé en ce que** la bague de friction (101a, 101b) est en fonte grise.

6. Disque de frein selon la revendication 1, **caractérisé en ce que** le collet (201, 202) est en venue de matière avec la bague de friction (101a, 101b).

7. Procédé de fabrication d'un disque de frein comprenant
une bague de friction (101a, 101b) qui est au moins partiellement en une première matière et qui comporte un collet (201, 202) formé dans la direction axiale, et un pot de frein (103) qui est au moins partiellement en une deuxième matière, différente de la première matière, et qui comporte un bord dirigé axialement vers la bague de friction (101a, 101b),
le procédé comprenant les étapes suivantes :
fournir (401) l'au moins une bague de friction (101a, 101b), fournir (402) le pot de frein (103),
relier (404) le collet (201, 202) au pot de frein (103) au moyen d'un élément de liaison (102) qui est passé à travers le trou ménagé dans le collet (201, 202) et dans le bord, **caractérisé en ce que**
une pièce intermédiaire (301) déformable plastiquement est fixée avant la liaison (404) entre l'élément de liaison (102) et la surface incurvée du collet (201, 202) adjacente à l'élément de liaison (102).

8. Procédé selon la revendication 7, **caractérisé en ce que** l'élément de liaison est réalisé sous la forme d'un rivet (102) et la pièce intermédiaire (301) est prévue entre la tête de rivet et la surface (201) du pot de frein (103) en appui sur la tête de rivet.

9. Procédé selon la revendication 7, **caractérisé en ce que** le pot de frein (103) est au moins partiellement en métal léger, notamment en aluminium.

10. Procédé selon la revendication 7, **caractérisé en ce que** le pot de frein (103) est au moins partiellement en métal, notamment en tôle.

11. Procédé selon la revendication 7, **caractérisé en ce que** la bague de friction (101a, 101b) est en fonte grise.
